(19) Europäisches Patentamt / European Patent Office / Office européen des brevets

(11) **EP 4 383 209 A1**

(12) **EUROPEAN PATENT APPLICATION**

(43) Date of publication:
**12.06.2024  Bulletin 2024/24**

(21) Application number: **23214346.1**

(22) Date of filing: **05.12.2023**

(51) International Patent Classification (IPC):
**G06V 10/26** (2022.01)  **G06V 10/44** (2022.01)
**G06V 10/74** (2022.01)  **G06V 10/762** (2022.01)
**G06V 10/764** (2022.01)  **G06V 10/778** (2022.01)
**G06V 10/82** (2022.01)

(52) Cooperative Patent Classification (CPC):
**G06V 10/764; G06V 10/26; G06V 10/454;**
**G06V 10/761; G06V 10/763; G06V 10/7788;**
**G06V 10/82;** G06V 2201/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.12.2022  JP 2022195687**

(71) Applicants:
• **SCREEN Holdings Co., Ltd.**
  **Kyoto-shi, Kyoto 602-8585 (JP)**
• **Wakayama University**
  **Wakayama-shi Wakayama 640-8303 (JP)**

(72) Inventors:
• **OKAYAMA, Toshiyuki**
  **Kyoto-shi, 602-8585 (JP)**
• **NOGUCHI, Takeshi**
  **Kyoto-shi, 602-8585 (JP)**
• **SHIMADA, Yoshinori**
  **Kyoto-shi, 602-8585 (JP)**
• **WADA, Toshikazu**
  **Wakayama-shi, 640-8303 (JP)**
• **KAMMA, Koji**
  **Wakayama-shi, 640-8303 (JP)**

(74) Representative: **Kilian Kilian & Partner mbB**
**Zielstattstraße 23a**
**81379 München (DE)**

(54) **IMAGE PROCESSING APPARATUS, LEARNING METHOD OF FEATURE EXTRACTOR, UPDATING METHOD OF IDENTIFIER, AND IMAGE PROCESSING METHOD**

(57)     An image processing apparatus includes a feature extractor and an identifier. The feature extractor outputs a feature vector corresponding to each pixel of an input image, as intermediate output data. The identifier outputs output data in which a region type of each pixel of the image is estimated, on the basis of the intermediate output data output from the feature extractor. Thus, a region type of each region in the image is estimated with the use of the feature extractor and the identifier. Therefore, by adjusting the feature extractor and the identifier in accordance with an estimation result, it is possible to acquire an estimation result close to user recognition.

FIG.2

EP 4 383 209 A1

**Description**

**BACKGROUND OF THE INVENTION**

**Field of the Invention**

The present invention relates to a technology for estimating each region type of plural types of regions included in an image.

**Description of the Background Art**

**[Background Art]**

There is conventionally known an inspection apparatus that captures an image of an industrial product and detects a defect of the industrial product on the basis of the acquired image.

An inspection technology for detecting a defect of an industrial product is described in Japanese Translation of PCT International Application Publication No. 2022-538468, for example.

In this type of inspection apparatus, conventionally, a defect region in an image is detected by rule-based image processing performed on a captured image. However, the rule-based image processing requires human determination in setting many parameters such as a threshold value. Further, the rule-based image processing is likely to cause a difference between a defect region output from an inspection apparatus and a region that is recognized as a defect by a user, and it is difficult to appropriately set parameters so as to reduce the difference.

Further, the above-described problem can probably be caused not only in image processing intended for detection of defects, but also in a case in which plural types of regions included in an image are to be identified, in general.

**SUMMARY OF THE INVENTION**

An object of the present invention is to provide a technology that makes it possible to acquire an estimation result close to user recognition in an image processing apparatus and an image processing method for estimating a region type of each region in an image.

The first invention is directed to an image processing apparatus that estimates each region type of plural types of regions included in an image, and the image processing apparatus includes: a feature extractor configured to output a feature vector corresponding to each of pixels of an image that is input, as intermediate output data; and an identifier configured to output output data in which region types of the respective pixels of the image are estimated, on the basis of the intermediate output data output from the feature extractor, wherein the region types include at least two types of a first region and a second region, a region where the closest known feature vector is a first feature vector corresponding to a known pixel belonging to the first region is a domain of the first feature vector in a feature space, a region where the closest known feature vector is a second feature vector corresponding to a known pixel belonging to the second region is a domain of the second feature vector in the feature space, when the feature vector output from the feature extractor belongs to the domain of the first feature vector, the identifier estimates that a pixel corresponding to the feature vector belongs to the first region, and when the feature vector output from the feature extractor belongs to the domain of the second feature vector, the identifier estimates that a pixel corresponding to the feature vector belongs to the second region.

The second invention is directed to the image processing apparatus of the first invention, wherein the feature space is three-dimensional.

The third invention is directed to the image processing apparatus of the first invention or the second invention, wherein the feature extractor is a machine learning model.

The fourth invention is directed to the image processing apparatus of any of the first to third inventions, wherein the identifier is a nearest neighbor identifier.

The fifth invention is directed to the image processing apparatus of any of the first to fourth inventions, wherein the image is a captured image of an object, and the first region is a defect region indicating a defect of the object.

The sixth invention is directed to a learning method of the feature extractor included in the image processing apparatus of the third invention, and the learning method includes the steps of: a) preparing a learning image including the first region and the second region; b) defining the first region that is known and the second region that is known in the learning image; c) inputting the first region that is known and the second region that is known, to the feature extractor, and outputting the feature vector from the feature extractor; and d) adjusting a parameter of the feature extractor such that the feature vector corresponding to the first region and the feature vector corresponding to the second region are separated from each other in the feature space.

The seventh invention is directed to the learning method of the sixth invention, wherein the step d) includes adjusting the parameter such that a loss function decreases, and the loss function is a function in which attractive force acts between feature vectors corresponding to the same region type among the region types and repulsive force acts between feature vectors corresponding to different region types among the region types.

The eighth invention is directed to the learning method of the sixth invention or the seventh invention, and the learning method further includes the steps of: e) inputting the learning image to the feature extractor of which parameter has been adjusted in the step d), and outputting the intermediate output data; f) inputting the intermediate output data to the identifier and estimating a region type of each of pixels of the learning image; g) displaying a result of estimation performed in the step f), to a user; and h) requesting the user to choose whether to perform relearning of the feature extractor, wherein when the user chooses to perform relearning of the feature extractor in the step h), the steps b) to d) are performed again.

The ninth invention is directed to an updating method of the identifier according to any of the first to fifth inventions, and the updating method includes the steps of: i) inputting an image to the feature extractor and outputting the intermediate output data from the feature extractor; j) inputting the intermediate output data to the identifier and estimating a region type of each of pixels of the image; k) displaying a result of estimation performed in the step j), to a user; and 1) requesting the user to choose whether to update the identifier, wherein when the user chooses to update the identifier in the step 1), a step of m) re-defining the first region that is known and the second region that is known in the image, and a step of n) updating the identifier on the basis of the known first region and the known second region that have been re-defined in the step m), are performed.

The tenth invention is directed to an image processing method for estimating each region type of plural types of regions included in an image, and the image processing method includes the steps of: P) inputting a to-be-inspected image to a feature extractor and outputting a feature vector corresponding to each of pixels of the to-be-inspected image from the feature extractor, as intermediate output data; and Q) inputting the intermediate output data to an identifier and outputting output data in which a region type of each of the pixels of the to-be-inspected image is estimated, from the identifier, wherein the region types include at least two types of a first region and a second region, a region where the closest known feature vector is a first feature vector corresponding to a known pixel belonging to the first region is a domain of the first feature vector in a feature space, a region where the closest known feature vector is a second feature vector corresponding to a known pixel belonging to the second region is a domain of the second feature vector in the feature space, in the step Q), when the feature vector output from the feature extractor belongs to the domain of the first feature vector, the identifier estimates that a pixel corresponding to the feature vector belongs to the first region, and in the step Q), when the feature vector output from the feature extractor belongs to the domain of the second feature vector, the identifier estimates that a pixel corresponding to the feature vector belongs to the second region.

According to the first to tenth inventions, a region type of each region in an image is estimated with the use of the feature extractor and the identifier. Therefore, by adjusting the feature extractor and the identifier in accordance with an estimation result, it is possible to acquire an estimation result close to user recognition.

These and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a view showing a configuration of an inspection apparatus;
Fig. 2 is a block diagram conceptually showing functions of a computer;
Fig. 3 is a view showing an example of a learning image or a to-be-inspected image;
Fig. 4 is a view showing an example of a feature space included in an identifier;
Fig. 5 is a flowchart showing a flow of a learning process of an image processing apparatus;
Fig. 6 is a flowchart showing a flow of a learning process of a feature extractor;
Fig. 7 is a flowchart showing a flow of an identification process performed on a to-be-inspected image; and
Fig. 8 is a flowchart in a case in which updating of an identifier or relearning of a feature extractor is performed after an identification process is performed on a to-be-inspected image.

## DESCRIPTION OF THE PREFERRED EMBODIMENTS

Hereinafter, a preferred embodiment of the present invention will be described with reference to the drawings.

## <1. Configuration of Inspection Apparatus>

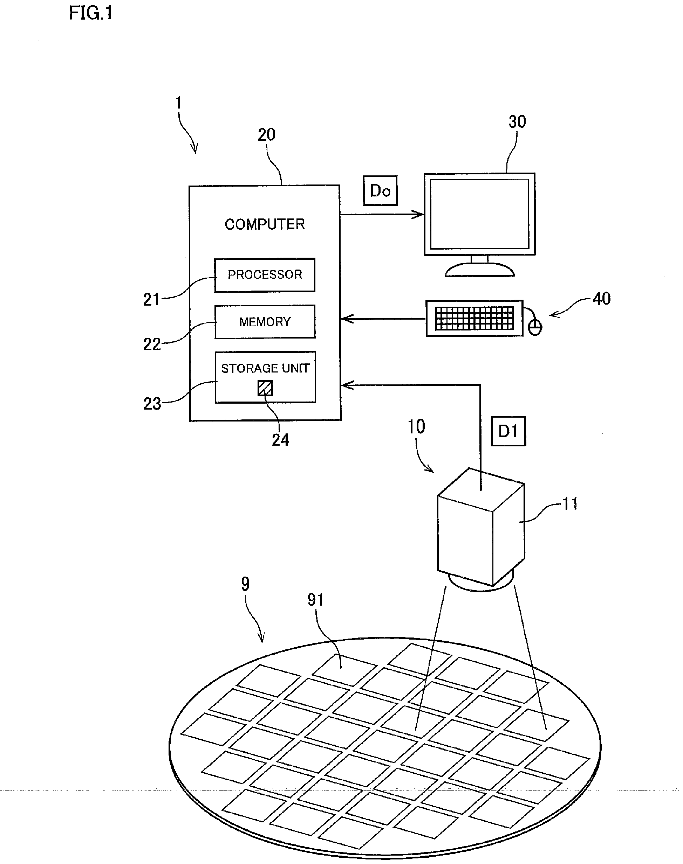

Fig. 1 is a view showing a configuration of an inspection apparatus 1 including an image processing apparatus according to one preferred embodiment of the present invention. The inspection apparatus 1 is an apparatus that captures an image of an object 9 and detects a defect in the object 9 on the basis of the acquired image. The object 9 is, for example, a semiconductor substrate. Alternatively, the object 9 may be another precision electronic component such as a substrate for a flat panel display or a printed circuit board. Further, the object 9 may be a sheet-shaped material such as printing paper. Moreover, the object 9 may be a biological sample such as a cell or an embryo.

As shown in Fig. 1, the inspection apparatus 1 includes an imaging unit 10, a computer 20, a display unit 30, and an input unit 40.

The imaging unit 10 includes a camera 11 for capturing an image of the object 9. The camera 11 includes an imaging element such as a CCD or a CMOS, and an optical system that forms an image of light incident from the object 9 on the imaging element. The imaging unit 10 may include an illumination device that emits light to the object 9 during image capture. The imaging unit 10 is electrically connected to the computer 20.

As shown in Fig. 1, in the surface of the object 9, a to-be-inspected pattern 91 such as a wiring pattern is formed. The imaging unit 10 captures an image of the to-be-inspected pattern 91 formed in the surface of the object 9. As a result, a captured image D1 including the to-be-inspected pattern 91 is acquired. The captured image D1 is data in which many pixels are arranged on two-dimensional coordinates and each pixel has a predetermined luminance value. The imaging unit 10 inputs the captured image D1 acquired by image capture, to the computer 20.

The computer 20 is a device configured to detect a defect of the object 9 on the basis of the captured image D1 input from the imaging unit 10. As shown in Fig. 1, the computer 20 includes a processor 21 such as a CPU, a memory 22 such as a RAM, and a storage unit 23 such as a hard disk drive.

In the storage unit 23, a computer program 24 for causing the computer 20 to perform a learning process and an identification process described later is stored. The computer program 24 is read out from a storage medium such as a CD or a DVD that can be read by the computer 20, and is stored in the storage unit 23. Alternatively, the computer program 24 may be downloaded into the computer 20 via a network.

The display unit 30 is a device configured to display various kinds of information regarding processes of the inspection apparatus 1. For the display unit 30, for example, a liquid crystal display device is used. The input unit 40 is a device configured to input various kinds of information regarding processes of the inspection apparatus 1. For the input unit 40, for example, a keyboard or a mouse is used. Note that the display unit 30 and the input unit 40 may be one device such as a touch panel. The display unit 30 and the input unit 40 are electrically connected to the computer 20.

## <2. Computer>

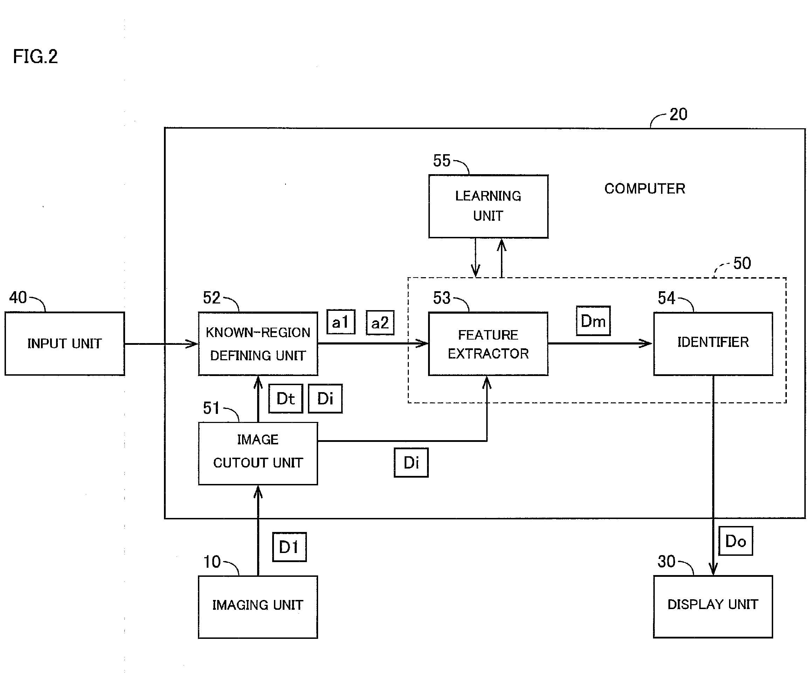

Fig. 2 is a block diagram conceptually showing functions of the above-described computer 20. As shown in Fig. 2, the computer 20 includes an image cutout unit 51, a known-region defining unit 52, a feature extractor 53, an identifier 54, and a learning unit 55. The respective functions of the image cutout unit, 51, the known-region defining unit 52, the feature extractor 53, the identifier 54, and the learning unit 55 are performed by an operation of the processor 21 of the computer 20 in accordance with the computer program 24.

The image cutout unit 51 is a processing unit configured to cut out a learning image Dt and a to-be-inspected image Di from the captured image D1. The learning image Dt is an image used in a learning process described later. The to-be-inspected image Di is an image to be inspected.

The image cutout unit 51 may automatically cut out the learning image Dt and the to-be-inspected image Di from the captured image D1 after determining a region of the to-be-inspected pattern 91. Alternatively, the image cutout unit 51 may cut out the learning image Dt and the to-be-inspected image Di from the captured image D1 on the basis of information input from the input unit 40. Meanwhile, the learning image Dt and the to-be-inspected image Di may be cut out from different captured images D1.

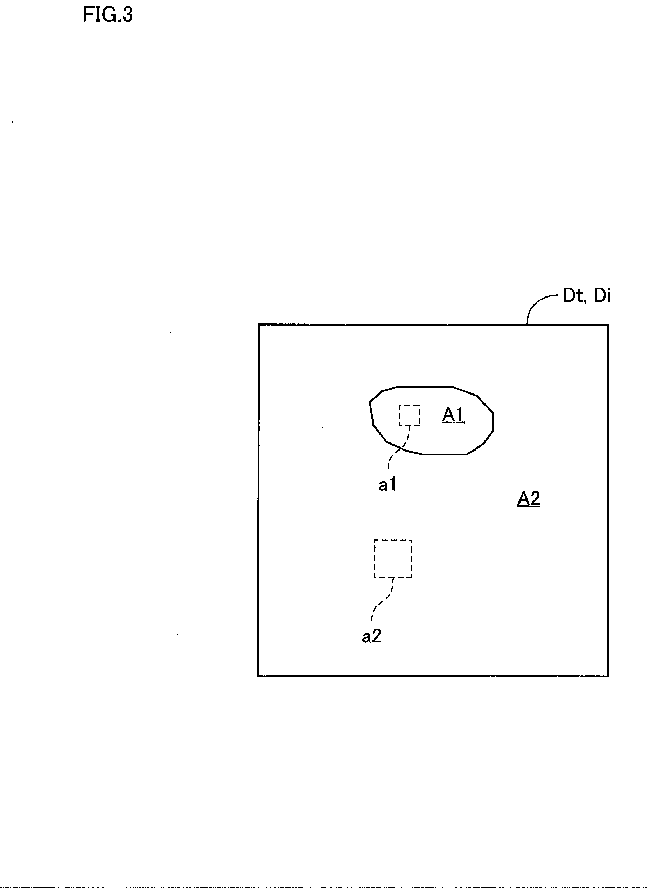

Fig. 3 is a view showing an example of the learning image Dt or the to-be-inspected image Di. In the surface of the object 9, there is a defect such as a chipped portion, a protrusion, line-width abnormality, and a foreign matter in the to-be-inspected pattern 91. Thus, as shown in Fig. 3, each of the learning image Dt and the to-be-inspected image Di includes a region corresponding to any of those defects (hereinafter referred to as a "defect region") A1, and a normal region free from a defect (hereinafter referred to as a "background region") A2.

The known-region defining unit 52 is a processing unit configured to define a known defect region a1 and a known background region a2 in the learning image Dt. The known-region defining unit 52 displays the learning image Dt on the display unit 30. A user operates the input unit 40 while checking the learning image Dt displayed on the display unit 30, to define one or more known defect regions a1 and one or more known background regions a2. The known-region defining unit 52 stores the known defect region a1 and the known background region a2 that are input from the input unit 40, into the storage unit 23.

The feature extractor 53 and the identifier 54 form an image processing apparatus 50 that classifies the to-be-inspected image Di into the defect region A1 and the background region A2 and outputs the regions. The image processing apparatus 50 estimates whether each of a plurality of pixels included in the to-be-inspected image Di is a pixel belonging to the defect region A1 (hereinafter referred to as a "defect pixel") or a pixel belonging to the background region A2 (hereinafter referred to as a "background pixel"). Then, the image processing apparatus 50 estimates that a region formed of pixels that are estimated as defect pixels is the defect region A1, and estimates that a region formed of pixels that are estimated as background pixels is the background region A2, in the to-be-inspected image Di.

The feature extractor 53 is a processing unit configured to perform feature extraction on an input image. The feature extractor 53 outputs a feature vector on the basis of the input image. The feature vector is a vector in a feature space defined using a plurality of dimensions. The dimensionality of the feature space is set to three, for example. Alternatively, the dimensionality of the feature space may be two, or four or more.

The feature extractor 53 includes a re-learnable learned machine learning model. For the feature extractor 53, a convolutional neural network (CNN) can be used, for example. Alternatively, as the machine learning model, another model such as a fully connected layer of a neural network or Vision Transformer may be used. The feature extractor 53 is generated by a learning process performed by the learning unit 55 on the basis of the known defect region a1 and the known background region a2 that are defined by the known-region defining unit 52. Details of the learning process will be given later.

The feature extractor 53 transforms each pixel of the input image into a feature vector. Specifically, in a case where the dimensionality of the feature space is three, the feature extractor 53 transforms each pixel of the image into a feature vector having three kinds of feature amounts. Then, the feature extractor 53 outputs the plurality of feature vectors corresponding to the plurality of pixels included in the image, to the identifier 54, as intermediate output data Dm.

Note that the feature extractor 53 may include a combination of a first feature extractor including a machine learning model and a second feature extractor that is rule-based. In such a case, for example, the first feature extractor may extract two kinds of feature amounts, and the second feature extractor may extract one kind of feature amount, to generate a feature vector from those three kinds of feature amounts.

The identifier 54 is a processing unit configured to identify the defect region A1 and the background region A2 in the to-be-inspected image Di on the basis of the intermediate output data Dm output from the feature extractor 53. Specifically, the identifier 54 is a processing unit configured to estimate a region type (the defect region A1 or the background region A2) of each portion in the to-be-inspected image Di on the basis of the intermediate output data Dm. For the identifier 54, for example, a nearest neighbor identifier is used.

The identifier 54 has a plurality of known feature vectors in the feature space. The known feature vectors are feature vectors corresponding to the pixels belonging to the known defect region a1 and the known background region a2 that are defined by the above-described known-region defining unit 52. A feature vector corresponding to a known defect pixel (hereinafter referred to as a "defect feature vector v1") is attached with a training label indicating the defect region A1. A feature vector corresponding to a known background pixel (hereinafter referred to as a "background feature vector v2") is attached with a training label indicating the background region A2. The defect feature vector v1 is one example of a "first feature vector" in the present invention. The background feature vector v2 is one example of a "second feature vector" in the present invention.

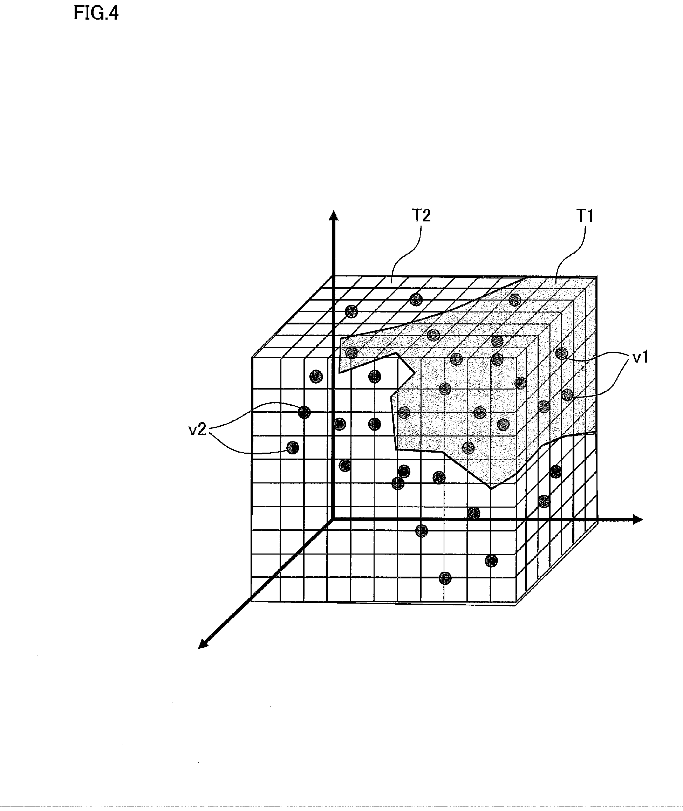

Fig. 4 is a view showing an example of the feature space included in the identifier 54. As shown in Fig. 4, in the identifier 54, the feature space is segmented into a domain T1 of the defect feature vector v1 and a domain T2 of the background feature vector v2. In the domain T1 of the defect feature vector v1, a known feature vector closest to each coordinate in its corresponding region is the defect feature vector v1. In the domain T2 of the background feature vector v2, a known feature vector closest to each coordinate in its corresponding region is the background feature vector v2.

The identifier 54 determines which domain the plurality of feature vectors included in the intermediate output data Dm (feature vectors to be identified) belong to, the domain T1 of the defect feature vector v1 or the domain T2 of the background feature vector v2. Then, the identifier 54 estimates that a pixel corresponding to a feature vector belonging to the domain T1 of the defect feature vector v1 in the to-be-inspected image Di is a defect pixel. Further, the identifier 54 estimates that a pixel corresponding to a feature vector belonging to the domain T2 of the background feature vector v2 in the to-be-inspected image Di is a background pixel.

The identifier 54 outputs a result image Do that is a result of classification of the to-be-inspected image Di into the defect region A1 and the background region A2, to the display unit 30. The identifier 54, for example, applies a predetermined color to the pixel estimated as a defect pixel in the to-be-inspected image Di, to thereby generate the result image Do. Alternatively, the identifier 54 may apply a color different from the color applied to the defect pixel, to also the pixel estimated as a background pixel. Further, the identifier 54 may use a method in which the defect region A1 is enclosed with an outline, or the like, for generating the result image Do in which the defect region A1 and the background region A2 are distinguished from each other. The result image Do is one example of "output data".

5

**<3. Learning Process>**

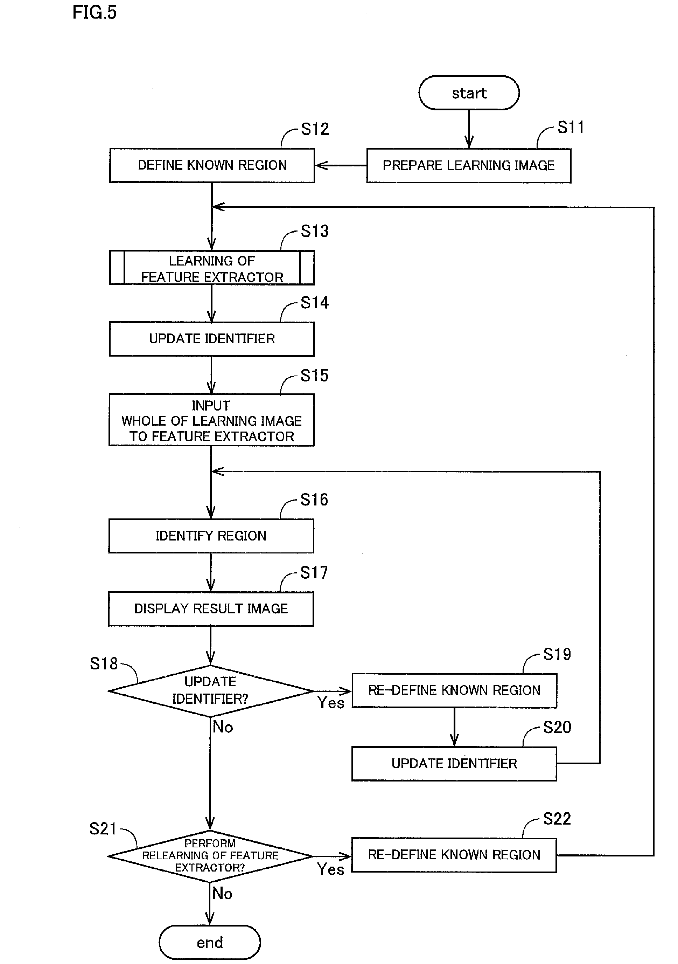

Next, a learning process of the above-described image processing apparatus 50 will be described. Fig. 5 is a flowchart showing a flow of the learning process of the image processing apparatus 50.

As shown in Fig. 5, the computer 20 prepares the learning image Dt, first (step S11). Specifically, the image cutout unit 51 cuts out the learning image Dt from the captured image D1. The number of learning images Dt may be one or more. The known-region defining unit 52 displays the acquired learning image Dt on the display unit 30.

Secondly, a user defines the known defect region a1 and the known background region a2 in the learning image Dt (step S12). Specifically, the user operates the input unit 40 while checking the learning image Dt displayed on the display unit 30, to define one or more known defect regions a1 and one or more known background regions a2, as shown in Fig. 3. This operation is achieved by, for example, dragging of a region to be defined on the learning image Dt displayed on the display unit 30.

The known-region defining unit 52 attaches a training label for the defect region A1 to a pixel belonging to the known defect region a1 having been defined (known defect pixel). Further, the known-region defining unit 52 attaches a training label for the background region A2 to a pixel belonging to the known background region a2 having been defined (known background pixel). Then, the known-region defining unit 52 stores the pixel belonging to each defined region, together with the training label, into the storage unit 23.

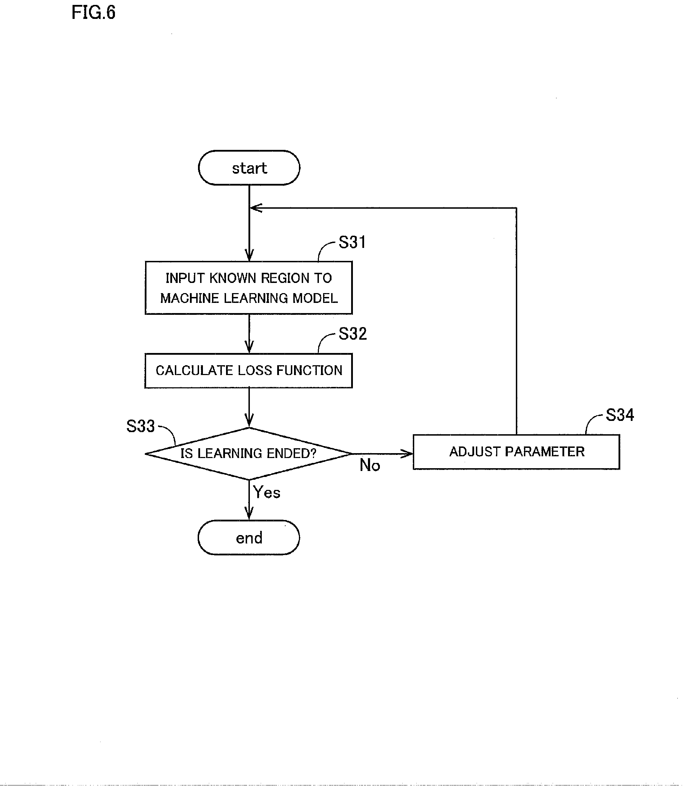

Subsequently, the learning unit 55 performs learning of the feature extractor 53 using the known defect region a1 and the known background region a2 that have been defined by the known-region defining unit 52, as training data (step S13). Fig. 6 is a flowchart showing a flow of the process of the step S13.

As shown in Fig. 6, first, the learning unit 55 inputs the known defect region a1 and the known background region a2 to a machine learning model used as the feature extractor 53, such as a CNN (step S31). Then, the machine learning model outputs a feature vector corresponding to each pixel of the known defect region a1 and the known background region a2.

Secondly, the learning unit 55 calculates a loss function on the basis of the feature vector output from the machine learning model (step S32). The loss function is defined by, for example, the following expression. The loss function is a function in which attractive force acts between feature vectors corresponding to the same region type (having the same training label), and repulsive force acts between feature vectors corresponding to different region types (having different training labels).

[Expression 1]

$$Loss\ (x_i, x_j)\ =\ \begin{cases} -\dfrac{\alpha}{\|x_i - x_j\| + \epsilon} & (t_i = t_j) \\ \dfrac{\beta}{\|x_i - x_j\| + \epsilon} & (otherwise) \end{cases}$$

In the above-described loss function, $x_i$ and $x_j$ represent feature vectors. Further, in the above-described loss function, $t_i$ and $t_j$ represent training labels. Specifically, $t_i$ and $t_j$ each represent the training label for either the defect region A1 or the background region A2. Moreover, $(t_i = t_j)$ represents that the training labels of the feature vectors $x_i$ and $x_j$ are the same with each other. Meanwhile, (otherwise) represents that the training labels of the feature vectors $x_i$ and $x_j$ are not the same with each other. Further, $\epsilon$ represents a constant for avoiding division by zero, $\alpha$ represents the strength of attractive force that acts between two feature vectors $x_i$ and $x_j$ in a case in which the training labels of the feature vectors $x_i$ and $x_j$ are the same with each other, and $\beta$ represents the strength of repulsive force that acts between two feature vectors $x_i$ and $x_j$ in a case in which the training labels of the feature vectors $x_i$ and $x_j$ are not the same with each other. Additionally, $\alpha$ and $\beta$ are both positive values.

In the above-described loss function, the denominator includes $\|x_i - x_j\|$ that represents the Euclidean distance between the feature vectors $x_i$ and $x_j$. Thus, in a case in which the distance between the feature vectors $x_i$ and $x_j$ is large, the absolute value of the loss function is small. In this case, the influence of attractive force or repulsive force that acts between the feature vectors $x_i$ and $x_j$ is reduced. Further, in a case in which the feature vectors $x_i$ and $x_j$ have the same training label (i.e., a case of "$(t_i = t_j)$") and the distance between the feature vectors $x_i$ and $x_j$ is small, the loss function has a smaller negative value. On the other hand, in a case in which the feature vectors $x_i$ and $x_j$ have different training labels (i.e., a case of "(otherwise)") and the distance between the feature vectors $x_i$ and $x_j$ is small, the loss function has a large value. In this case, the influence of repulsive force that acts between the feature vectors $x_i$ and $x_j$ is increased.

After the loss function is calculated in the step S32, the learning unit 55 determines whether to end the learning of the feature extractor 53 (step S33). Specifically, the learning unit 55 compares the value calculated using the loss function with a predetermined threshold value. When the value calculated using the loss function is larger than the predetermined threshold value (step S33: No), the learning unit 55 continues the learning of the feature extractor 53. In this case, the learning unit 55 adjusts a parameter of the machine learning model such that the value calculated using the loss function decreases (step S34), and performs again the processes of the steps S31 to S33.

As the processes of the steps S31 to S34 are repeated, the feature vector corresponding to each defect pixel and the feature vector corresponding to each background pixel are gradually separated from each other in the feature space output from the machine learning model. The learning unit 55 ends the learning of the feature extractor 53 when the value calculated using the loss function becomes equal to or smaller than the threshold value (step S33: Yes).

The above-described learning results in generation of the feature extractor 53 that can output the feature vectors of the respective pixels in such a manner that the feature vector corresponding to each defect pixel and the feature vector corresponding to each background pixel are separated from each other in the feature space, on the basis of the input image. Note that the feature vectors corresponding to defect pixels are not necessarily required to be put together at one spot in the feature space. The feature vectors corresponding to defect pixels may be put together at a plurality of spots in the feature space. Further, also the feature vectors corresponding to background pixels are not necessarily required to be put together at one spot in the feature space. The feature vectors corresponding to background pixels may be put together at a plurality of spots in the feature space.

The description refers back to Fig. 5. When the learning of the feature extractor 53 ends in the step S13, subsequently, the learning unit 55 updates the identifier 54 (step S14). In the step S14, in the identifier 54, a feature space is set, and a plurality of known defect feature vectors v1 and a plurality of known background feature vectors v2 are set in the feature space as shown in Fig. 4. The known defect feature vectors v1 are feature vectors that are output from the learned feature extractor 53 on the basis of the plurality of defect pixels belonging to the known defect region a1 defined in the step S12. The known background feature vectors v2 are feature vectors that are output from the learned feature extractor 53 on the basis of the plurality of background pixels belonging to the known background region a2 defined in the step S12.

Further, in the step S14, the domain T1 of the defect feature vector v1 and the domain T2 of the background feature vector v2 are set in the feature space. The domain T1 of the defect feature vector v1 is a region where a known feature vector closest to each coordinate in its corresponding region is the defect feature vector v1. The domain T2 of the background feature vector v2 is a region where a known feature vector closest to each coordinate in its corresponding region is the background feature vector v2. At a boundary between the two domains T1 and T2, a distance to the closest known defect feature vector v1 and a distance to the closest known background feature vector v2 are equal to each other.

Subsequently, the learning unit 55 inputs the whole of the learning image Dt to the learned feature extractor 53 (step S15). Thus, the feature extractor 53 outputs the feature vectors corresponding to the respective pixels in the whole of the learning image Dt, as the intermediate output data Dm.

After that, the identifier 54 identifies the defect region A1 and the background region A2 in the learning image Dt on the basis of the intermediate output data Dm output from the feature extractor 53 (step S16). The identifier 54 determines which domain the plurality of feature vectors included in the intermediate output data Dm belong to, the domain T1 of the defect feature vector v1 or the domain T2 of the background feature vector v2. Then, the identifier 54 estimates that a pixel corresponding to the feature vector belonging to the domain T1 of the defect feature vector v1 in the learning image Dt is a defect pixel. Further, the identifier 54 estimates that a pixel corresponding to the feature vector belonging to the domain T2 of the background feature vector v2 in the learning image Dt is a background pixel.

The identifier 54 applies a predetermined color to the pixel estimated as a defect pixel in the learning image Dt. As a result, the result image Do indicating an estimation result of the defect region A1 and the background region A2 is generated. The identifier 54 displays the generated result image Do on the display unit 30 (step S17). The user can visually check the identification result of the defect region A1 and the background region A2 in the learning image Dt at the sight of the result image Do displayed on the display unit 30.

Note that the identifier 54 may apply a color different from the color applied to the defect pixel, to the background pixel also. Further, the identifier 54 may use a method in which the defect region A1 is enclosed with an outline, or the like, for generating the result image Do in which the defect region A1 and the background region A2 can be identified.

Subsequently, the identifier 54 requests the user to choose whether to update the identifier 54 (step S18). When the user determines that the identification result indicated by the result image Do is insufficient, the user chooses to update the identifier 54 (step S18: Yes). In this case, the user re-defines the known defect region a1 and the known background region a2 in the learning image Dt (step S19).

In the step S19, the user points out a spot where it is considered that the identifier 54 has performed erroneous estimation in the learning image Dt, while referring to the result image Do. Then, the user attaches a training label that is recognized as correct by the user, to the spot. For example, in a case in which a pixel that is recognized as the defect region A1 by the user is the background region A2 in the result image Do, the user defines the pixel as the known defect region a1. Meanwhile, in a case in which a pixel that is recognized as the background region A2 by the user is the defect region A1 in the result image Do, the user defines the pixel as the known background region a2.

In this case, the learning unit 55 updates the identifier 54 on the basis of the known defect region a1 and the known background region a2 that have been re-defined (step S20). In other words, the known defect feature vector v1 and the known background feature vector v2 are re-set in the feature space in the same manner as in the above-described step S14. As a result, the domain T1 of the defect feature vector v1 and the domain T2 of the background feature vector v2 are updated in the feature space.

After the identifier 54 is updated, the identifier 54 identifies again the defect region A1 and the background region A2 in the learning image Dt on the basis of the intermediate output data Dm output in the step S15 (step S16). Then, the identifier 54 displays again the result image Do indicating an identification result of the defect region A1 and the background region A2 on the display unit 30 (step S17). The user determines again whether the identification result indicated by the result image Do is satisfactory (step S18).

In this manner, by repetition of the processes of the steps S16 to S20, the domain T1 of the defect feature vector v1 and the domain T2 of the background feature vector v2 in the feature space can be brought close to an appropriate state in which the user recognition is reflected. Consequently, the identification result indicated by the result image Do can be brought close to the user recognition.

When the identification result indicated by the result image Do is satisfactory, the user does not choose to update the identifier 54 in the step S18 (step S18: No). Further, the user does not choose to update the identifier 54 in the step S18 also when it is determined that a desired identification result cannot be acquired only by updating of the identifier 54 (step S18: No).

In this case, subsequently, the learning unit 55 requests the user to choose whether to perform releaming of the feature extractor 53 (step S21). When the user determines that the identification result indicated by the result image Do has not been improved sufficiently only by updating of the identifier 54, the user chooses to perform releaming of the feature extractor 53 (step S21: Yes). In this case, the user re-defines the known defect region a1 and the known background region a2 in the learning image Dt (step S22).

In the step S22, the user points out a spot where it is considered that the identifier 54 has performed erroneous estimation in the learning image Dt, while referring to the result image Do in the same manner as in the step S19. Then, the user attaches a training label that is recognized as correct by the user, to the spot.

After that, the flow returns back to the step S13, where the learning unit 55 performs again learning of the feature extractor 53 on the basis of the known defect region a1 and the known background region a2 that have been re-defined (step S13). Specifically, the processes of the steps S31 to S34 in Fig. 6 are performed again. As a result, the parameter of the feature extractor 53 is updated on the basis of the known defect region a1 and the known background region a2 that have been re-defined. Consequently, the accuracy of feature-vector output by the feature extractor 53 is improved.

After that, the processes of the steps S14 to S17 are performed again. Thus, the result image Do indicating an identification result of the defect region A1 and the background region A2 is displayed again on the display unit 30 (step S17). The user determines again whether the identification result indicated by the result image Do is satisfactory (steps S18 and S21).

In this manner, by repetition of the processes of the steps S13 to S22, the intermediate output data Dm output from the feature extractor 53 can be brought close to an appropriate state in which the user recognition is reflected. Consequently, the identification result indicated by the result image Do can be brought close to the user recognition.

When the result image Do that is satisfactory to the user is acquired by the processes of the steps S13 to S22, the user does not choose to perform relearning of the feature extractor 53 in the step S21 (step S21: No). Consequently, the accurate feature extractor 53 and the accurate identifier 54 can be acquired.

In the step S13 of the above explanation, in, the learning is repeated until the value calculated using the loss function becomes equal to or smaller than the threshold value. However, in step S13, it is not necessary to use the threshold value to determine the end of learning. After adjusting the parameters of the machine learning model once in the step S13, the learning unit 55 may perform steps S14-S17 to identify the regions (S16) and display the result image (S17). Then, the user may check the result image in step S21 and the learning unit 55 may perform releaming of the feature extractor 53 based on the user's choice.

### <4. Identification Process>

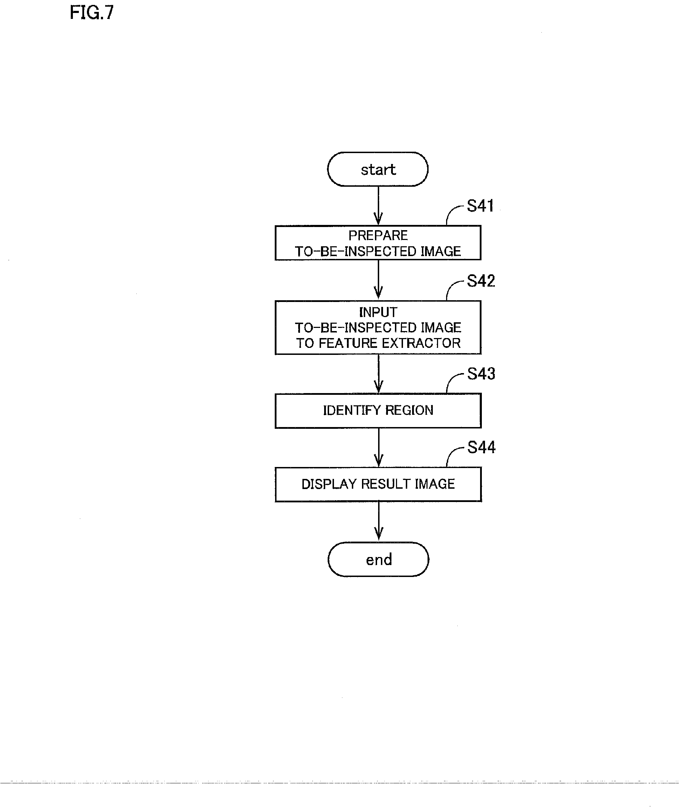

After the above-described processes of the steps S13 to S22 end, the image processing apparatus 50 performs an identification process of the defect region A1 and the background region A2 on the to-be-inspected image Di. Fig. 7 is a flowchart showing a flow of the identification process performed on the to-be-inspected image Di.

As shown in Fig. 7, the computer 20 prepares the to-be-inspected image Di, first (step S41). Specifically, the image cutout unit 51 cuts out the to-be-inspected image Di from the captured image D1.

Secondly, the image processing apparatus 50 inputs the acquired to-be-inspected image Di to the learned feature extractor 53 (step S42). This causes the feature extractor 53 to output a feature vector corresponding to each pixel of the to-be-inspected image Di, as the intermediate output data Dm.

Next, the identifier 54 identifies the defect region A1 and the background region A2 in the to-be-inspected image Di on the basis of the intermediate output data Dm output from the feature extractor 53 (step S43). The identifier 54 determines which domain the plurality of feature vectors included in the intermediate output data Dm belong to, the domain T1 of the defect feature vector v1 or the domain T2 of the background feature vector v2. Then, the identifier 54 estimates that a pixel corresponding to the feature vector belonging to the domain T1 of the defect feature vector v1 in the to-be-inspected image Di is a defect pixel. Further, the identifier 54 estimates that a pixel corresponding to the feature vector belonging to the domain T2 of the background feature vector v2 in the to-be-inspected image Di is a background pixel.

The identifier 54 applies a predetermined color to the pixel estimated as a defect pixel in the to-be-inspected image Di. Thus, the result image Do indicating an estimation result of the defect region A1 and the background region A2 is generated. The identifier 54 displays the generated result image Do on the display unit 30 (step S44). The user can visually check the identification result of the defect region A1 and the background region A2 in the to-be-inspected image Di at the sight of the result image Do displayed on the display unit 30.

Note that the identifier 54 may apply a color different from the color applied to the defect pixel, to the background pixel also. Further, the identifier 54 may use a method in which the defect region A1 is enclosed with an outline, or the like, for generating the result image Do in which the defect region A1 and the background region A2 can be identified.

As described above, the image processing apparatus 50 estimates the defect region A1 and the background region A2 in an image with the use of the feature extractor 53 and the identifier 54. Thus, by adjusting the feature extractor 53 and the identifier 54 in accordance with an estimation result, it is possible to acquire an estimation result close to the user recognition.

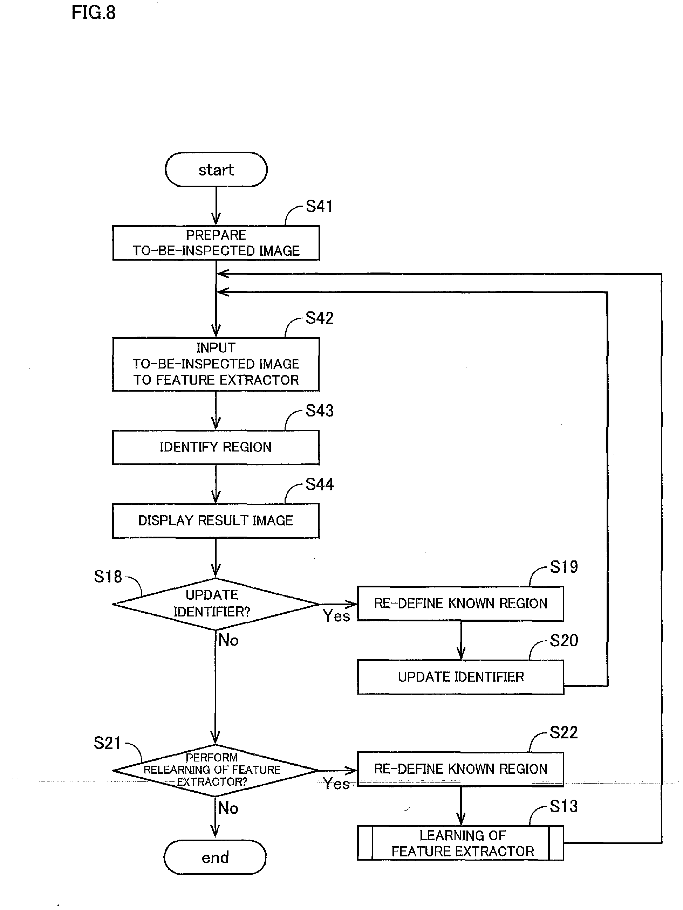

Fig. 8 is a flowchart in a case in which updating of the identifier 54 or relearning of the feature extractor 53 is performed after the identification process is performed on the to-be-inspected image Di. In a case in which it is determined in the step S44 that an estimation result is unsatisfactory as a result of checking the result image Do displayed on the display unit 30, the user may perform updating of the identifier 54 or relearning of the feature extractor 53 as shown in Fig. 8.

For updating of the identifier 54 (step S18: Yes), processes similar to those in the steps S19 to S20 described above are performed. Meanwhile, for relearning of the feature extractor 53 (step S21: Yes), processes similar to those in the steps S22 and S13 described above are performed. Thus, an estimation result of a region can be brought close to the user recognition also after the identification process on the to-be-inspected image Di is started.

### <5. Modifications>

Hereinabove, one preferred embodiment of the present invention has been described, but the present invention is not limited to the above-described preferred embodiment. Below, description about various modifications, mainly focusing on differences from the above-described preferred embodiment, will be given.

In the above-described preferred embodiment, the image processing apparatus 50 estimates each region type of two types of regions (the defect region A1 and the background region A3) included in an input image. However, the image processing apparatus and the image processing method of the present invention may estimate each region type of three or more types of regions included in an input image.

In the above-described preferred embodiment, the defect region A1 corresponds to the "first region", and the background region A2 corresponds to the "second region". However, the region types to be identified by the image processing apparatus 50 may include regions other than the defect region A1 and the background region A2. Specifically, the region types to be identified by the image processing apparatus 50 are not limited to the "first region" and the "second region", and may include a "third region" and the like.

In the above-described preferred embodiment, the defect feature vector v1 corresponds to the "first feature vector", and the background feature vector v2 corresponds to the "second feature vector". However, the known feature vectors to be set in the feature space are not limited to the "first feature vector" and the "second feature vector", and may include a "third feature vector" and the like.

In the above-described preferred embodiment, the image processing apparatus 50 is mounted in the inspection apparatus 1 configured to detect a defect of the object 9. However, the image processing apparatus 50 may estimate a plurality of region types in an image for other purposes than inspection.

Further, the details of the above-described method and apparatus can be appropriately modified or partly omitted within a scope not departing from the gist of the present invention. Moreover, the respective elements described in the above-described preferred embodiment and modifications may be appropriately combined unless contradiction occurs.

While the invention has been shown and described in detail, the foregoing description is in all aspects illustrative and not restrictive. It is therefore understood that numerous modifications and variations can be devised without departing from the scope of the invention.

**Claims**

1. An image processing apparatus (50) that estimates each region type of plural types of regions included in an image, comprising:

   a feature extractor (53) configured to output a feature vector corresponding to each of pixels of an image that is input, as intermediate output data (Dm); and
   an identifier (54) configured to output output data (Do) in which region types of the respective pixels of the image are estimated, on the basis of the intermediate output data (Dm) output from the feature extractor (53), wherein
   the region types include at least two types of a first region (A1) and a second region (A2),
   a region where the closest known feature vector is a first feature vector (v1) corresponding to a known pixel belonging to the first region (A1) is a domain (T1) of the first feature vector (v1) in a feature space,
   a region where the closest known feature vector is a second feature vector (v2) corresponding to a known pixel belonging to the second region (A2) is a domain (T2) of the second feature vector (v2) in the feature space,
   when the feature vector output from the feature extractor (53) belongs to the domain (T1) of the first feature vector (v1), the identifier (54) estimates that a pixel corresponding to the feature vector belongs to the first region (A1), and
   when the feature vector output from the feature extractor (53) belongs to the domain (T2) of the second feature vector (v2), the identifier estimates that a pixel corresponding to the feature vector belongs to the second region (A2).

2. The image processing apparatus (50) according to claim 1, wherein the feature space is three-dimensional.

3. The image processing apparatus (50) according to claim 1 or 2, wherein the feature extractor (53) is a machine learning model.

4. The image processing apparatus (50) according to any of claims 1 to 3, wherein the identifier (54) is a nearest neighbor identifier.

5. The image processing apparatus (50) according to any of claims 1 to 4, wherein

   the image is a captured image (D1) of an object, and
   the first region (A1) is a defect region indicating a defect of the object.

6. A learning method of the feature extractor (53) included in the image processing apparatus (50) according to claim 3, comprising the steps of:

   a) (S11) preparing a learning image (Dt) including the first region (A1) and the second region (A2);
   b) (S12) defining the first region (A1) that is known and the second region (A2) that is known in the learning image (Dt);
   c) (S31) inputting the first region (A1) that is known and the second region (A2) that is known, to the feature extractor (53), and outputting the feature vector from the feature extractor (53); and
   d) (S34) adjusting a parameter of the feature extractor (53) such that the feature vector corresponding to the first region (A1) and the feature vector corresponding to the second region (A2) are separated from each other in the feature space.

7. The learning method according to claim 6, wherein

   the step d) includes adjusting the parameter such that a loss function decreases, and
   the loss function is a function in which attractive force acts between feature vectors corresponding to the same region type among the region types and repulsive force acts between feature vectors corresponding to different region types among the region types.

8. The learning method according to claim 6 or 7, further comprising the steps of:

e) (S15) inputting the learning image (Dt) to the feature extractor (53) of which parameter has been adjusted in the step d), and outputting the intermediate output data (Dm);

f) (S16) inputting the intermediate output data (Dm) to the identifier (54) and estimating a region type of each of pixels of the learning image (Dt);

g) (S17) displaying a result of estimation performed in the step f), to a user; and

h) (S21) requesting the user to choose whether to perform releaming of the feature extractor (53), wherein when the user chooses to perform releaming of the feature extractor (53) in the step h), the steps b) to d) are performed again.

9. An updating method of the identifier (54) according to any of claims 1 to 5, comprising the steps of:

i) (S15) inputting an image to the feature extractor (53) and outputting the intermediate output data (Dm) from the feature extractor (53);

j) (S16) inputting the intermediate output data (Dm) to the identifier (54) and estimating a region type of each of pixels of the image;

k) (S17) displaying a result of estimation performed in the step j), to a user; and

l) (S18) requesting the user to choose whether to update the identifier (54), wherein

when the user chooses to update the identifier (54) in the step 1), a step of m) (S19) re-defining the first region (A1) that is known and the second region (A2) that is known in the image, and a step of n) (S20) updating the identifier (54) on the basis of the known first region (A1) and the known second region (A2) that have been re-defined in the step m), are performed.

10. An image processing method for estimating each region type of plural types of regions included in an image, comprising the steps of:

P) (S42) inputting a to-be-inspected image (Di) to a feature extractor (53) and outputting a feature vector corresponding to each of pixels of the to-be-inspected image (Di) from the feature extractor (53), as intermediate output data (Dm); and

Q) (S43) inputting the intermediate output data (Dm) to an identifier (54) and outputting output data (Do) in which a region type of each of the pixels of the to-be-inspected image (Di) is estimated, from the identifier (54), wherein

the region types include at least two types of a first region (A1) and a second region (A2),

a region where the closest known feature vector is a first feature vector (v1) corresponding to a known pixel belonging to the first region (A1) is a domain (T1) of the first feature vector (v1) in a feature space,

a region where the closest known feature vector is a second feature vector (v2) corresponding to a known pixel belonging to the second region (A2) is a domain (T2) of the second feature vector (v2) in the feature space,

in the step Q), when the feature vector output from the feature extractor (53) belongs to the domain (T1) of the first feature vector (v1), the identifier (54) estimates that a pixel corresponding to the feature vector belongs to the first region (A1), and

in the step Q), when the feature vector output from the feature extractor (53) belongs to the domain (T2) of the second feature vector (v2), the identifier (54) estimates that a pixel corresponding to the feature vector belongs to the second region (A2).

FIG.1

FIG.2

**FIG.3**

FIG.4

FIG.5

start

S11 PREPARE LEARNING IMAGE

S12 DEFINE KNOWN REGION

S13 LEARNING OF FEATURE EXTRACTOR

S14 UPDATE IDENTIFIER

S15 INPUT WHOLE OF LEARNING IMAGE TO FEATURE EXTRACTOR

S16 IDENTIFY REGION

S17 DISPLAY RESULT IMAGE

S18 UPDATE IDENTIFIER?
 — Yes → S19 RE-DEFINE KNOWN REGION → S20 UPDATE IDENTIFIER
 — No

S21 PERFORM RELEARNING OF FEATURE EXTRACTOR?
 — Yes → S22 RE-DEFINE KNOWN REGION
 — No

end

FIG.6

```
                    ┌─────────────┐
                    │    start    │
                    └─────────────┘
                           │
                           ▼                    ┌─── S31
              ┌────────────────────────────┐
              │  INPUT KNOWN REGION TO      │
              │  MACHINE LEARNING MODEL     │
              └────────────────────────────┘
                           │                    ┌─── S32
                           ▼
              ┌────────────────────────────┐
              │   CALCULATE LOSS FUNCTION   │
              └────────────────────────────┘
                           │
    S33 ─┐                 ▼
         ◇─────────────────────────────◇              ┌─── S34
         │      IS LEARNING ENDED?      │   No  ┌──────────────────────┐
         ◇─────────────────────────────◇ ─────▶│   ADJUST PARAMETER    │
                           │                    └──────────────────────┘
                         Yes
                           ▼
                    ┌─────────────┐
                    │     end     │
                    └─────────────┘
```

FIG.7

```
              ┌─────────────┐
              │    start    │
              └─────────────┘
                     │
                     ▼              ⌐S41
         ┌──────────────────────────┐
         │         PREPARE          │
         │   TO-BE-INSPECTED IMAGE  │
         └──────────────────────────┘
                     │
                     ▼              ⌐S42
         ┌──────────────────────────┐
         │          INPUT           │
         │   TO-BE-INSPECTED IMAGE  │
         │    TO FEATURE EXTRACTOR  │
         └──────────────────────────┘
                     │
                     ▼              ⌐S43
         ┌──────────────────────────┐
         │      IDENTIFY REGION     │
         └──────────────────────────┘
                     │
                     ▼              ⌐S44
         ┌──────────────────────────┐
         │   DISPLAY RESULT IMAGE   │
         └──────────────────────────┘
                     │
                     ▼
              ┌─────────────┐
              │     end     │
              └─────────────┘
```

FIG.8

```
                    ┌─────────┐
                    │  start  │
                    └────┬────┘
                         │           ┌─S41
                         ▼
              ┌──────────────────────┐
              │       PREPARE        │
              │ TO-BE-INSPECTED IMAGE│
              └──────────┬───────────┘◄─────────────────────────────┐
                         │                                          │
                         │◄───────────────────────────────┐        │
                         │           ┌─S42                 │        │
                         ▼                                 │        │
              ┌──────────────────────┐                    │        │
              │        INPUT         │                    │        │
              │ TO-BE-INSPECTED IMAGE│                    │        │
              │  TO FEATURE EXTRACTOR│                    │        │
              └──────────┬───────────┘                    │        │
                         │           ┌─S43                 │        │
                         ▼                                 │        │
              ┌──────────────────────┐                    │        │
              │    IDENTIFY REGION   │                    │        │
              └──────────┬───────────┘                    │        │
                         │           ┌─S44                 │        │
                         ▼                                 │        │
              ┌──────────────────────┐                    │        │
              │  DISPLAY RESULT IMAGE │                    │        │
              └──────────┬───────────┘                    │        │
                         │                    ┌─S19        │        │
        S18─┐            ▼                                 │        │
           ╱────────────────╲  Yes  ┌──────────────────────┐       │
          ╱     UPDATE       ╲─────►│  RE-DEFINE KNOWN REGION│      │
          ╲   IDENTIFIER?    ╱      └──────────┬───────────┘       │
           ╲────────────────╱                  │      ┌─S20        │
                  │No                          ▼                   │
                  │               ┌──────────────────────┐         │
                  │               │   UPDATE IDENTIFIER   │─────────┘
                  │               └──────────────────────┘
                  │                                  ┌─S22
        S21─┐     ▼
           ╱────────────────╲  Yes  ┌──────────────────────┐
          ╱ PERFORM          ╲─────►│ RE-DEFINE KNOWN REGION│
          ╲RELEARNING OF FEAT.╱     └──────────┬───────────┘
          ╲ EXTRACTOR?       ╱                 │      ┌─S13
           ╲────────────────╱                  ▼
                  │No          ┌──────────────────────────┐
                  ▼            ║      LEARNING OF          ║
             ┌─────────┐       ║   FEATURE EXTRACTOR       ║─────┐
             │   end   │       └──────────────────────────┘
             └─────────┘
```

## EUROPEAN SEARCH REPORT

Europäisches
Patentamt
European
Patent Office
Office européen
des brevets

**Application Number**

EP 23 21 4346

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAIME MELENDEZ ET AL: "Efficient distance-based per-pixel texture classification with Gabor wavelet filters", PATTERN ANALYSIS AND APPLICATIONS, SPRINGER-VERLAG, LO, vol. 11, no. 3-4, 4 December 2007 (2007-12-04), pages 365-372, XP019593794, ISSN: 1433-755X * sections 1-6; page 365 - page 371 * ----- | 1-10 | INV. G06V10/26 G06V10/44 G06V10/74 G06V10/762 G06V10/764 G06V10/778 G06V10/82 |
| X | SATAPURE P S ET AL: "Automatic articular cartilage segmentation with multiple models", 2017 1ST INTERNATIONAL CONFERENCE ON INTELLIGENT SYSTEMS AND INFORMATION MANAGEMENT (ICISIM), IEEE, 5 October 2017 (2017-10-05), pages 30-37, XP033270700, DOI: 10.1109/ICISIM.2017.8122143 [retrieved on 2017-11-27] * sections I-III; page 30 - page 33 * ----- -/-- | 1-10 | |

| | | | TECHNICAL FIELDS SEARCHED (IPC) |
|---|---|---|---|
| | | | G06V |

The present search report has been drawn up for all claims

| Place of search | Date of completion of the search | Examiner |
|---|---|---|
| The Hague | 7 March 2024 | Chehade, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 23 21 4346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REN ZHONGHE ET AL: "State of the Art in Defect Detection Based on Machine Vision", INTERNATIONAL JOURNAL OF PRECISION ENGINEERING AND MANUFACTURING-GREEN TECHNOLOGY, [Online] vol. 9, no. 2, 1 March 2022 (2022-03-01), pages 661-691, XP055918340, KP ISSN: 2288-6206, DOI: 10.1007/s40684-021-00343-6 Retrieved from the Internet: URL:https://link.springer.com/content/pdf/ 10.1007/s40684-021-00343-6.pdf> [retrieved on 2024-03-07] * section 4; page 669 – page 681 * ----- | 1-10 | |

TECHNICAL FIELDS
SEARCHED      (IPC)

The present search report has been drawn up for all claims

| Place of search | Date of completion of the search | Examiner |
|---|---|---|
| The Hague | 7 March 2024 | Chehade, Thomas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022538468 A